# EUROPÄISCHE PATENTANMELDUNG

(11) **EP 3 440 911 A1**
(43) Veröffentlichungstag der Anmeldung: **13.02.2019**
(21) Anmeldenummer: 18401071.8
(22) Anmeldetag: 01.08.2018
(51) Int. Cl.: A01C 7/10, A01C 7/04

(54) **SÄMASCHINE MIT ÜBERWACHTEM KÖRNERSTROM**

(30) Priorität: 08.08.2017 DE 102017117975
(71) Anmelder: Amazonen-Werke H. Dreyer GmbH & Co. KG, 49205 Hasbergen (DE)
(72) Erfinder: Johannaber, Stefan Jan, 49536 Lienen (DE); Teckemeyer, Stephan, 49504 Lotte (DE)

(57) **Zusammenfassung**

Die Erfindung umfasst eine Sämaschine umfassend einen zentralen Vorratsbehälter (1) und mehrere Reiheneinheiten, wobei jede Reiheneinheit eine Vereinzelungsvorrichtung (2) umfasst, wobei jeder Vereinzelungsvorrichtung (2) ein Sensor (5) zum Detektieren von Fehlstellen im vereinzelten Körnerstrom zugeordnet ist, und wobei eine von den Sensoren (5) verschiedene Überwachungseinrichtung zum Detektieren von Doppelstellen vorgesehen ist.

## Beschreibung

Die Erfindung betrifft eine Sämaschine umfassend einen zentralen Vorratsbehälter und mehrere Reiheneinheiten, wobei jede Reiheneinheit eine Vereinzelungsvorrichtung umfasst.

Vereinzelungsvorrichtungen finden in landwirtschaftlichen Sämaschinen Anwendung, um einzelne Saatgutkörner an Abgabeelemente, etwa Säschare, weiterzuleiten und dann auf einer landwirtschaftlichen Fläche abzulegen. Die einzelnen Körner sollten dabei in vorherbestimmten Abständen abgelegt werden. Um das Saatgut zu vereinzeln, verwenden bekannte Vereinzelungsvorrichtungen eine mit einer Druckdifferenz beaufschlagbare Vereinzelungsscheibe. Die Vereinzelungsscheibe umfasst Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Vereinzelungsvorrichtung ist daher aus der DE 10 2012 105 048 A1 bekannt geworden. Diese Vereinzelungsvorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Eine entsprechende Vereinzelungsvorrichtung, welche noch unabhängiger von Form und Größe der Körner ist, ist aus der DE 10 2015 114 147 A1 bekannt.

Die Vereinzelungsqualität solcher Vereinzelungsvorrichtungen mit rotierender Fördereinrichtung hängt unter anderem von der Drehzahl der Fördereinrichtung ab. Wird die Drehzahl der Fördereinrichtung zu hoch eingestellt, kann es zu Fehlstellen kommen, also dazu, dass in gewissen Intervallen keine Körner abgegeben werden. Alternativ, wenn die Drehzahl zu gering eingestellt ist, kann es zu Doppelstellen sowie zu Verstopfungen kommen.

Um die Vereinzelungsqualität einer solchen Vorrichtung zu kontrollieren bzw. zu verbessern, schlägt die DE 10 2015 114 147 A1 vor, einen Sensor der Vereinzelungsvorrichtung zuzuordnen, mit dem die Anzahl der Körner des Saatguts, die über die Auslassöffnung aus dem Gehäuse der Vereinzelungsvorrichtung ausgeschleust und an die Abgabeeinrichtung weitergeleitet werden, genau bestimmbar ist.

Die dabei eingesetzten Sensoren müssen sehr präzise arbeiten und sind daher aufwendig und kostspielig. Insbesondere bei einer Sämaschine mit vielen Reiheneinheiten ist dies nachteilig.

Aufgabe der Erfindung ist es daher, eine Sämaschine bereitzustellen, welche es auf einfachere und damit kosteneffizientere Weise ermöglicht, die Qualität der Vereinzelung zu überwachen. Diese Aufgabe wird durch eine Sämaschine gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass jeder Vereinzelungsvorrichtung ein Sensor zum Detektieren von Fehlstellen im vereinzelten Körnerstrom zugeordnet ist. Da Fehlstellen im Gegensatz zu Doppelstellen verhältnismäßig einfach zu detektieren sind, kann hier ein einfacher und somit kosteneffizienter Sensor Verwendung finden. Zum Detektieren von Doppelstellen ist dagegen eine von den Sensoren verschiedene Überwachungseinrichtung vorgesehen. Durch diese separate Überwachungseinrichtung kann auf präzise aber kostenintensive Sensoren weitestgehend verzichtet werden.

Die Sämaschine kann insbesondere ausgebildet sein, um Saatgut für Getreide, wie etwa Weizen, Roggen, Gerste, Hafer oder Raps zu vereinzeln.

Die Sensoren der Vereinzelungsvorrichtungen können im Abgabebereich der jeweiligen Vereinzelungsvorrichtung angeordnet sein, insbesondere im Bereich einer Auslassöffnung eines Vereinzelungsgehäuses der Vereinzelungsvorrichtung. Die Sensoren können jedoch auch im Bereich einer der Auslassöffnung nachgeschalteten Verbindungsleitung zwischen dem Gehäuse der Vereinzelungsvorrichtung und der Abgabeeinrichtung, insbesondere dem Säschar, angeordnet sein.

Die der Auslassöffnung nachgeschaltete Verbindungsleitung (Fallrohr) kann insbesondere das Gehäuse mit einem Säschar verbinden. In diesem Fall kann der Sensor im Bereich der Mündung der Verbindungsleitung zum Säschar angeordnet sein. Insbesondere kann der Sensor im unteren Drittel, insbesondere im unteren Viertel, der Verbindungsleitung angeordnet sein. Die räumliche Angabe "unteres Drittel" bzw. "unteres Viertel" bezieht sich hier auf den Betrieb der Vereinzelungsvorrichtungen, in dem die Vereinzelungsvorrichtungen oberhalb der Säschare angeordnet sind. Die Länge der Verbindungsleitung kann dann in drei bzw. vier gleich lange Abschnitte unterteilt werden, wobei der unterste Abschnitt, also das untere Drittel bzw. untere Viertel dem Säschar am nächsten liegt.

Bei den Sensoren, die zum Detektieren von Fehlstellen im vereinzelten Körnerstrom ausgebildet sind, kann es sich insbesondere um optische Sensoren oder piezoelektrische Sensoren handeln. Beispielsweise können die Sensoren jeweils eine Kamera umfassen, wobei die Fehlstellen basierend auf einer Auswertung eines oder mehrerer digitaler Bilder der Kamera bestimmbar sind.

Im vereinzelten Körnerstrom können Raten von mehreren Hundert Körnern pro Sekunde erreicht werden. Bei Doppelstellen befinden sich die Körner beispielsweise nebeneinander, wodurch sie sich gegenseitig abschatten, oder so dicht hintereinander, dass sienicht als getrennte Körner wahrgenommen werden können.

Die den einzelnen Vereinzelungsvorrichtungen zugeordneten Sensoren können insbesondere so ausgebildet sein, dass sie Doppelstellen nicht auflösen können. Beispielsweise kann die räumliche und/oder zeitliche Auflösung geringer sein, als zur Identifikation von Doppelstellen erforderlich. Auch kann der Auswertealgorithmus nicht zum Detektieren von Doppelstellen ausgebildet sein. Somit werden Doppelstellen von diesen Sensoren als einzelnes Korn registriert oder gezählt und eine "Fehlstelle" als fehlendes Korn im Körnerstrom identifiziert. Die Sensoren können also auch als Körnerzähler ausgebildet sein, jedoch ohne die Fähigkeit Doppelstellen zu berücksichtigen.

Ein Messsignal der jeweiligen Sensoren kann an eine Steuereinrichtung übermittelbar sein. Die Steuereinrichtung kann aus den Messsignalen der Sensoren die Fehlstellen ermitteln und für eine spätere Verarbeitung in einem Speicher speichern, insbesondere für jede einzelne Reiheneinheit und/oder für die gesamte Sämaschine. Auch die Gesamtzahl der Körner im Körnerstrom (ohne Berücksichtigung von Doppelstellen) kann bestimmt und gespeichert werden, insbesondere für jede einzelne Reiheneinheit und/oder für die gesamte Sämaschine.

Die Steuereinrichtung kann auch so ausgebildet sein, dass sie den Anteil der Fehlstellen oder die Gesamtzahl der Fehlstellen mit einem Grenzwert vergleicht und, wenn der Grenzwert überschritten wird, die Einstellung der Vereinzelungsvorrichtungen entsprechend korrigiert, insbesondere die Drehzahl der Fördereinrichtung der Vereinzelungsvorrichtungen reduziert. Alternativ oder zusätzlich kann bei einem Überschreiten des Grenzwertes auch ein visueller, akustischer und/oder haptischer Alarm an eine Bedienperson ausgegeben werden.

Aus dem zentralen Vorratsbehälter kann das Saatgut, insbesondere pneumatisch, an die einzelnen Reiheneinheiten geleitet werden. Durch Verwendung beispielsweise eines Verteilerkopfs kann hier eine volumetrische Vordosierung stattfinden. Die Sämaschine kann also einen Verteilerkopf zwischen dem zentralen Vorratsbehälter und den Reiheneinheiten umfassen. Die Vereinzelungsvorrichtungen der einzelnen Reiheneinheiten können jeweils einen Sammelbehälter umfassen, denen das Saatgut aus dem zentralen Vorratsbehälter zugeführt wird. Von den Sammelbehältern aus kann das Saatgut dann in die Vereinzelungsvorrichtungen selbst gelangen, wo es zur Vereinzelung des Saatguts kommt.

Die Überwachungseinrichtung kann einen dem zentralen Vorratsbehälter zugeordneten Wiegesensor und eine Recheneinheit umfassen, wobei die Recheneinheit ausgebildet ist, um basierend auf Daten des Wiegesensors die abgegebene Körnermenge zu bestimmen und mit Hilfe von Messsignalen der den Vereinzelungsvorrichtungen zugeordneten Sensoren zur Bestimmung von Fehlstellen auf den Anteil von Doppelstellen zu schließen.

Beispielsweise kann die basierend auf Daten des Wiegesensors bestimmte abgegebene Körnermenge mit der Gesamtzahl der Körner im Körnerstrom verglichen werden, die von den Sensoren ohne Berücksichtigung von Doppelstellen bestimmt wurde. So kann die Differenz zwischen der basierend auf Daten des Wiegesensors bestimmten abgegebenen Körnermenge und der Gesamtzahl der Körner im Körnerstrom, die von den Sensoren ohne Berücksichtigung von Doppelstellen bestimmt wurde, der Anzahl der von den Sensoren nicht erfassten Doppelstellen entsprechen.

Gemäß einer Ausführungsform kann der Quotient aus den beiden Größen gebildet und dann als Faktor verwendet werden, um nachfolgende Messungen der Gesamtzahl der Körner im Körnerstrom, die von den Sensoren ohne Berücksichtigung von Doppelstellen bestimmt wird, zu korrigieren.

Wurden beispielsweise 105 Körner ausgebracht, aber nur 100 durch die Sensoren gezählt, wurden fünf Doppelstellen nicht erkannt. Dies entspricht einem Anteil an Doppelstellen am Körnerstrom von 5%. Durch Multiplikation der von den Sensoren ohne Berücksichtigung von Doppelstellen gezählten Körner mit einem Faktor, in diesem Beispiel 1,05, kann bei nachfolgenden Messungen auf die tatsächlich ausgebrachte Körnermenge geschlossen werden.

Die Recheneinheit kann der oben genannten Steuereinrichtung entsprechen, oder ein Teil davon sein.

Durch den Wiegesensor kann insbesondere die Massenreduktion am zentralen Vorratsbehälter bestimmbar sein. Bei dem Wiegesensor kann es sich insbesondere um einen piezoelektrischen Sensor handeln. Es können auch mehrere Wiegesensoren vorgesehen sein.

Alternativ oder zusätzlich kann die Überwachungseinrichtung an einer oder mehreren, nicht aber an allen Reiheneinheiten einen der Vereinzelungsvorrichtung zugeordneten Körnerzähler umfassen, der zum Detektieren von Fehlstellen und Doppelstellen ausgebildet ist. Im Gegensatz zu den allen Vereinzelungsvorrichtungen zugeordneten Sensoren zum Detektieren von Fehlstellen, ist mit diesen zusätzlichen Körnerzählern, die an einzelnen Reiheneinheiten vorgesehen sind, eine genaue Bestimmung der von der Vereinzelungsvorrichtung abgegebenen Anzahl an Saatgutkörner möglich, einschließlich der Bestimmung der Anzahl und/oder des Anteils an Doppelstellen.

Der oder die zusätzlichen Körnerzähler können mit einer Steuereinrichtung verbunden sein, welche aus den Messsignalen der zusätzlichen Körnerzähler den Anteil der Doppelstellen an der Gesamtzahl der von den Vereinzelungsvorrichtungen mit zusätzlichem Körnerzähler ausgegebenen Körner bestimmt. Dieser Anteil kann durch die Steuereinrichtung auch auf jene Reiheneinheiten übertragen werden, welche keinen zusätzlichen Körnerzähler umfassen. Dadurch kann auf die Gesamtanzahl an Doppelstellen geschlossen werden.

Beim Übertragen des Anteils an Doppelstellen auf Reiheneinheiten ohne zusätzlichen Körnerzähler kann die von dem Fehlstellensensor der jeweiligen Reiheneinheit ermittelte Anzahl an Fehlstellen herangezogen werden. Beispielsweise kann der Anteil an Doppelstellen umgekehrt proportional zur Anzahl der Fehlstellen sein.

Alternativ oder zusätzlich kann die Überwachungseinrichtung eine Recheneinheit umfassen, wobei die Recheneinheit ausgebildet ist, um basierend auf einer eingegebenen Körneranzahl oder einer basierend auf einer Körnermasse errechneten Körneranzahl, die innerhalb einer vorgegebenen Zeit von einer Vereinzelungsvorrichtung ausgegeben wurde, und basierend auf Messsignalen des dieser Vereinzelungsvorrichtung zugeordneten Sensors zur Bestimmung von Fehlstellen auf die Anzahl und/oder den Anteil von Doppelstellen zu schließen. Beispielsweise kann im Zuge einer händischen Abdrehprobe eine Körnermasse bestimmt werden, die innerhalb einer vorgegebenen Zeit abgegeben wird. Beispielsweise über das "Tausendkorngewicht" kann dann auf die Körneranzahl geschlossen werden. Die Bestimmung dieser Körneranzahl kann durch eine Bedienperson oder durch die Recheneinheit selbst durchgeführt werden.

Durch die Sensoren zur Bestimmung von Fehlstellen können, wie oben erwähnt, Doppelstellen nicht aufgelöst werden. Folglich zählen diese Sensoren eine Doppelstelle als ein Event bzw. ein Korn. Neben der Anzahl an Fehlstellen können diese Sensoren also - wie eingangs erwähnt - auch eine Abschätzung für die Körneranzahl liefern, nicht jedoch unter Berücksichtigung von Doppelstellen.

Wenn gemäß der zuletzt beschriebenen Alternative die tatsächlich ausgebrachte Körneranzahl mit der von den Sensoren bestimmten Körneranzahl verglichen wird, kann also Anzahl bzw. Anteil an Doppelstellen bestimmt werden. Wurden wie im weiter oben erwähnten Beispiel 105 Körner ausgebracht, aber nur 100 durch die Sensoren gezählt, wurden beispielweise fünf Doppelstellen nicht erkannt. Durch Multiplikation der gezählten Körner mit einem Faktor, in diesem Beispiel 1,05, kann wiederum auf die tatsächlich ausgebrachte Körnermenge geschlossen werden.

Die oben beschriebenen Alternativen für die Überwachungseinrichtung können auch beliebig kombiniert werden, um die Präzision der Bestimmung von Doppelstellen zu erhöhen.

Die Sämaschine kann außerdem eine Steuerung umfassen, die so ausgebildet ist, dass sie die Vereinzelungsvorrichtungen der Reiheneinheiten basierend auf dem Ergebnis der Bestimmung der Doppelstellen steuert oder regelt. Die Steuerung kann insbesondere so ausgebildet sein, dass sie die Drehzahl der einzelnen Fördereinrichtungen der Vereinzelungsvorrichtungen basierend auf einem Vergleich mit einem Sollwert regelt oder steuert.

Die Steuerung kann beispielsweise so ausgebildet sein, dass sie den Anteil der Doppelstellen oder die Gesamtzahl der Doppelstellen mit einem Grenzwert vergleicht und, wenn der Grenzwert überschritten wird, die Einstellung der Vereinzelungsvorrichtungen entsprechend korrigiert, insbesondere die Drehzahl der Fördereinrichtung der Vereinzelungsvorrichtungen erhöht. Alternativ oder zusätzlich kann bei einem Überschreiten des Grenzwertes auch ein visueller, akustischer und/oder haptischer Alarm an eine Bedienperson ausgegeben werden.

Die Steuerung kann Teil der oben genannten Steuereinrichtung sein oder dieser entsprechen. Insbesondere kann die oben beschriebene Steuereinrichtung einem Bordcomputer der Sämaschine oder des die Sämaschine ziehenden Schleppers entsprechen.

Die Vereinzelungsvorrichtungen können derart ausgebildet sein, dass sie jeweils eine in einem Gehäuse drehbar gelagerte Fördereinrichtung aufweisen, die wenigstens einen Zentrierschieber umfasst, wobei ein Führungselement so im Gehäuse angeordnet ist, dass der Zentrierschieber bei seiner Drehbewegung das Führungselement wenigstens teilweise überstreicht, wobei der Zentrierschieber und das Führungselement so ausgebildet sind, dass im Betrieb der Vereinzelungsvorrichtung Saatgut durch den Zentrierschieber entlang einer Führungsfläche des Führungselements von einem Aufnahmebereich in einen Abgabebereich geschoben wird, und wobei der Zentrierschieber so ausgebildet ist, dass er ein Korn des Saatguts beim Transport vom Aufnahmebereich zum Abgabebereich zentriert, indem er es wenigstens teilweise beidseitig abstützt oder führt.

Nicht zentrierte Körner, die im Aufnahmebereich aufgenommen und entlang der Führungsfläche transportiert werden, können infolge ausgesondert werden, sodass im Abgabebereich das zentrierte Korn verbleibt und an die Abgabeeinrichtung zur Ablage auf einer landwirtschaftlichen Fläche weitergeleitet werden kann. Insbesondere kann genau ein Korn durch den Zentrierschieber zentriert geführt werden.

Die Angabe "beidseitig abstützt oder führt" bedeutet hier, dass der Zentrierschieber Elemente umfasst, welche das zentrierte Korn an beiden Seiten abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch Elemente umfassen, welche das zentrierte Korn in Drehrichtung gesehen nach hinten abstützt. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss.

Der Zentrierschieber kann so im Gehäuse gelagert sein, dass die Kreisbahn im Betrieb der Vereinzelungsvorrichtung im Wesentlichen vertikal verläuft. Insbesondere kann die Kreisbahn mit der Senkrechten einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Als Aufnahmebereich kann ein Teil des Gehäuseinneren bezeichnet werden, in dem im Betrieb ein Reservoir von Körnern des Saatguts so bereitgestellt wird, dass der Zentrierschieber wenigstens eines dieser Körner aufnehmen und zum Abgabebereich hin bewegen kann.

Der Aufnahmebereich kann ein bestimmtes Kreissegment der Kreisbahn des Zentrierschiebers umfassen.

Als Abgabebereich kann ein Teil des Gehäuseinneren bezeichnet werden, in dem eine Auslassöffnung im Gehäuse angeordnet ist, über die wenigstens ein Korn des Saatguts, das vom Zentrierschieber in den Abgabebereich geschoben wurde, aus dem Gehäuse ausgebracht werden kann. Das wenigstens eine Korn kann dann an eine Abgabeeinrichtung geleitet werden, über die das wenigstens eine Korn auf einer landwirtschaftlichen Fläche abgelegt wird. Das wenigstens eine Korn kann insbesondere dem durch den Zentrierschieber zentrierten Korn entsprechen.

Als Führungsfläche des Führungselements wird hierin die für die Förderung des Saatguts vom Aufnahmebereich in den Abgabebereich wirksame Fläche des Führungselements bezeichnet. Mit anderen Worten entspricht die Führungsfläche des Führungselements der Oberfläche des Führungselements, auf der Körner des Saatguts bei der Förderung von dem Aufnahmebereich in den Abgabebereich hin bewegt werden. Aufgrund der Bewegung entlang der Kreisbahn wird das Saatgut durch Fliehkraft gegen die Führungsfläche des Führungselements gedrückt. Die Führungsfläche des Führungselements dient daher als Stütze für das Saatgut entgegen der Fliehkraft.

Wenn die Breite der Führungsfläche abnimmt geht diese Stützwirkung für bestimmte Körner des Saatguts verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von Saatgut im Aufnahmebereich bereitgestellt werden kann, selbst wenn über die Zufuhrleitung temporär zu wenig Saatgut zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des Saatguts bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des Saatguts weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für ausgesonderte Körner angeordnet sein.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Vereinzelungsvorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert ist, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des Saatguts beidseitig stützbar oder führbar ist. Das Element kann nach vorne hin offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des Saatguts umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und stellen sich infolge der Fliehkraftwirkung auf. Damit können diese Borsten ein Korn des Saatguts seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein. Dieses Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Vereinzelungsvorrichtung kann wenigstens ein Störelement umfassen, welches so ausgebildet ist, dass Körner des Saatguts, die nicht durch den Zentrierschieber zentriert werden unter Einfluss des Störelements ihre Lage ändern oder vom Transport zum Abgabebereich hin ausgesondert werden. Ein derartiges Störelement begünstigt das Aussonderung überschüssiger Körner und somit die Vereinzelung des Saatguts.

Das Störelement kann beispielsweise eine Druckluftdüse umfassen.

Es kann also wenigstens eine Druckluftdüse vorgesehen und so angeordnet sein, dass Druckluft auf Saatgut gerichtet werden kann, welches durch den Zentrierschieber entlang der Führungsfläche des Führungselements geschoben wird. Diese Druckluft kann eine Störung für Körner des Saatguts darstellen, welche nicht durch den Zentrierschieber zentriert geführt werden. Dadurch kann die Aussonderung von überschüssigen Körnern unterstützt werden. Dies kann auch eine zuverlässigere Vereinzelung des Saatguts ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Außerdem stellt die Erfindung ein Verfahren zum Ausbringen von Saatgut mit einer oben beschriebenen Sämaschine bereit umfassend ein Detektieren von Fehlstellen im vereinzelten Körnerstrom mittels der Sensoren, die an den Reiheneinheiten vorgesehen sind, und ein Detektieren von Doppelstellen mittels der von den Sensoren verschiedenen Überwachungseinrichtung.

Weitere Merkmale und Vorteile der Erfindung werden nachfolgend anhand der beispielhaften Figuren erläutert. Dabei zeigt:
Fig. 1 eine schematische Darstellung einer beispielhaften Sämaschine; und
Fig. 2 einen Querschnitt durch eine beispielhafte Vereinzelungsvorrichtung.

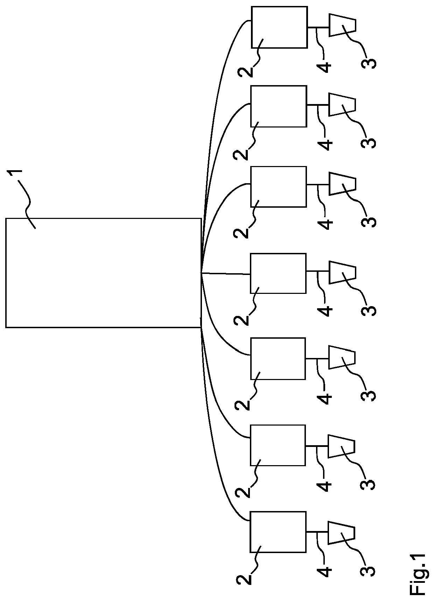

Fig. 1 illustriert den prinzipiellen Aufbau einer Sämaschine gemäß der Erfindung. Diese umfasst einen zentralen Vorratsbehälter 1 und mehrere damit verbundene Reiheneinheiten, in diesem Beispiel sieben Reiheneinheiten. Die Anzahl der Reiheneinheiten ist nicht beschränkt, es sollten jedoch mehr als zwei Reiheneinheiten vorgesehen sein. Die Reiheneinheiten sind nebeneinander (in Reihe) quer zur Fahrtrichtung angeordnet. Es wäre auch möglich, dass die Reiheneinheiten in Fahrtrichtung zueinander versetzt sind, und/oder dass mehrere Reihen von Reiheneinheiten vorgesehen sind. Wenn mehrere Reihen vorgesehen sind, können die Reiheneinheiten der verschiedenen Reihen quer zur Fahrtrichtung versetzt zueinander angeordnet sein.

Jede Reiheneinheit umfasst eine Vereinzelungsvorrichtung 2 und ein Säschar 3. Vereinzelungsvorrichtung 2 und Säschar 3 sind jeweils über eine Verbindungsleitung 4 verbunden. Die Säschare 3 können beliebig ausgebildet sein, beispielsweise als Doppelscheibenschar, als Gänsefußschar oder dergleichen. Anstelle der Säschare 3 könnten auch jeweils eine Andrückrolle vorgesehen sein oder eine gemeinsame Andrückrolle für alle Reiheneinheiten.

Das Saatgut, insbesondere für Getreide, kann über mit Druckluft beaufschlagbare Leitungen vom zentralen Vorratsbehälter 1 zu den Vereinzelungsvorrichtungen 2 pneumatisch gefördert werden. Ein nicht gezeigter Verteilerkopf kann vorgesehen sein, um das Saatgut vorzudosieren.

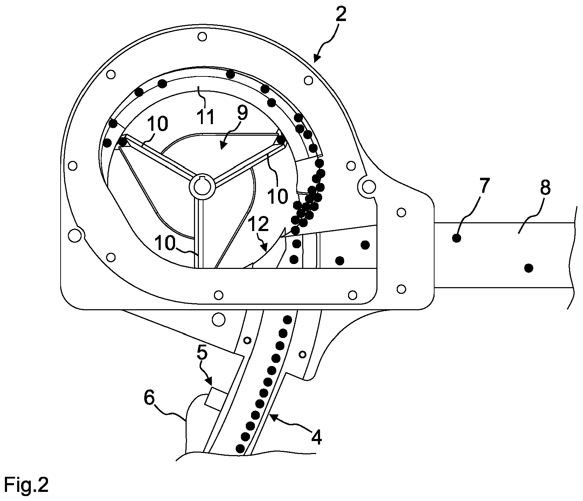

Ein Querschnitt durch eine beispielhafte Vereinzelungsvorrichtung ist in Fig. 2 gezeigt.

Die Vereinzelungsvorrichtung 2 umfasst ein Gehäuse, in dem eine Fördereinrichtung 9 drehbar gelagert ist.

Über eine Zufuhrleitung 8 werden Körner 7 des Saatguts in einen Aufnahmebereich 12 im Gehäuse transportiert. Die Zufuhrleitung 8 kann mit einem nicht dargestellten Sammelbehälter verbunden sein, der über einen nicht gezeigten Verteilerkopf mit Saatgut gespeist wird.

Die Fördereinrichtung 9 umfasst in diesem Beispiel drei Zentrierschieber 10, welche bei ihrer Drehbewegung wenigstens teilweise ein Führungselement 11 überstreichen, welches wenigstens teilweise entlang einer Kreisbahn angeordnet ist, deren Radius der Länge der Zentrierschieber 10 entspricht.

Die Zentrierschieber 10 und das Führungselement 11 wirken so zusammen, dass im Betrieb der Vereinzelungsvorrichtung Saatgut durch die Zentrierschieber 10 entlang einer Führungsfläche des Führungselements 11 von dem Aufnahmebereich 12 in einen Abgabebereich geschoben wird.

Im Abgabebereich ist eine Auslassöffnung vorgesehen, über die das Saatgut aus dem Gehäuse ausgeschleust werden kann. Das so ausgeschleuste Saatgut kann an eine Abgabeeinrichtung geleitet werden, welche das Saatgut auf einer landwirtschaftlichen Fläche ablegt. Die Abgabeeinrichtung kann beispielsweise ein Säschar 3 umfassen, wie in Fig. 1 gezeigt.

In Fig. 2 ist ein Teil einer Verbindungsleitung 4 dargestellt, welche das Gehäuse mit der nicht gezeigten Abgabeeinrichtung verbindet, und über die aus dem Gehäuse ausgeschleustes Saatgut an die Abgabeeinrichtung geleitet werden kann.

Die Vorrichtung gemäß Fig. 2 arbeitet in gewünschter Weise. Insbesondere ist der Abstand zwischen den vereinzelten Körnern in der Leitung 4 annähernd konstant. Außerdem wird je Zeitintervall nur ein einzelnes Korn ausgeschleust. Es kommt daher weder zu Fehlstellen noch zu Doppelstellen, also Zeitintervallen, in denen entweder kein Korn oder zwei Körner von der Vereinzelungsvorrichtung abgegeben werden.

Es ist jedoch denkbar, dass durch die Vereinzelungsvorrichtung in bestimmten Zeitintervallen kein Korn ausgegeben wird. Dadurch erhöhen sich die Abstände zwischen den Körnern in der Leitung 4. Entsprechend erhöhen sich auch die Abstände des abgelegten Saatgutes auf der landwirtschaftlichen Fläche, was wiederum dazu führt, dass die landwirtschaftliche Fläche nicht optimal genutzt werden kann. Diese Betriebsweise ist also üblicherweise unerwünscht.

Es ist auch möglich, dass in bestimmten Zeitintervallen nicht ein einzelnes Korn sondern zwei Körner gleichzeitig abgegeben werden. Dies führt zu sogenannten Doppelstellen, was dazu führt, dass an einem Ort der landwirtschaftlichen Fläche anstelle eines einzelnen Korns zwei Körner abgelegt werden. Dies ist ebenfalls nachteilig, da sich die aus dem Saatgut resultierenden Pflanzen gegenseitig negativ beeinflussen können und es somit zu keiner optimalen Ausnutzung des Saatgutes kommt.

Zu solchen Fehl- oder Doppelstellen kann es insbesondere kommen, wenn die Drehzahl, mit der die drehbar gelagerte Fördereinrichtung 9 im Betrieb rotiert nicht optimal eingestellt ist, insbesondere nicht auf den zugeförderten Strom von Saatgut über die Zufuhrleitung 8 angepasst ist. Ist die Drehzahl zu hoch, wird über die Zufuhrleitung 8 nicht genügend Saatgut zugeführt, was dazu führt, dass es zu Fehlstellen kommt.

Ist die Drehzahl demgegenüber zu gering stauen sich viele Körner 7 des Saatguts im Aufnahmebereich 12 und die Vereinzelung durch die Zentrierschieber 10 in Zusammenwirken mit dem Führungselement 11 kann nicht ausreichend effizient erfolgen. Es kommt also zu Doppelstellen.

Die Vereinzelungsvorrichtung gemäß dem Ausführungsbeispiel umfasst daher einen in Fig. 2 gezeigten Sensor 5, mit dem die Anzahl der Körner des Saatguts bestimmbar ist, die über die Auslassöffnung aus dem Gehäuse ausgeschleust und an die Abgabeeinrichtung weitergeleitet werden. Der Sensor 5 ist also ein Körnerzähler. Der Sensor 5 kann auch Fehlstellen registrieren ist jedoch nicht in der Lage, Doppelstellen aufzulösen. Wenn zwei Körner in einem bestimmten Zeitintervall abgegeben werden, zählt der Sensor 5 diese Körner nur als ein Korn. Eine Bestimmung der Anzahl oder des Anteils von Doppelstellen im Körnerstrom ist mit dem Sensor 5 also nicht möglich. Alle Reiheneinheiten der beispielhaften Sämaschine sind mit einem solchen Sensor 5 ausgestattet.

Der Sensor 5 ist in diesem Beispiel im Bereich der Leitung 4 angeordnet. Der Sensor 5 könnte jedoch auch weiter stromaufwärts im Bereich der Auslassöffnung angeordnet sein oder alternativ auch im Bereich der hier nicht dargestellten Abgabeeinrichtung, insbesondere im unteren Drittel oder unteren Viertel der Leitung 4.

Der Sensor 5 ist über eine Datenleitung 6 mit einer hier nicht dargestellten Steuereinrichtung verbunden.

Bei dem Sensor 5 kann es sich um einen optischen Sensor oder einen piezoelektrischen Sensor handeln. Messsignale des Sensors 5 können über die Datenleitung 6 an die Steuereinrichtung übermittelt werden. Die Messsignale können beispielsweise digitalen Bildern entsprechen. Durch Auswertung dieser digitalen Bilder kann bestimmt werden, ob in einem bestimmten Zeitintervall Fehlstellen vorliegen, und wenn ja, mit welcher Anzahl bzw. welchem Anteil.

Um die Vereinzelungsqualität zu überwachen, ist es jedoch erforderlich, neben den Fehlstellen auch Doppelstellen zu bestimmen. Da entsprechend präzise Sensoren jedoch aufwendig in der Fertigung und damit kostenintensiv sind, ist erfindungsgemäß eine von den Sensoren 5 verschiedene Überwachungseinrichtung zum Detektieren von Doppelstellen vorgesehen.

Beispielsweise kann im Bereich des zentralen Vorratsbehälters 1 ein Wiegesensor angeordnet sein, der mit einer nicht dargestellten Recheneinheit verbunden ist. Die Recheneinheit ist ausgebildet, um basierend auf Daten des Wiegesensors die abgegebene Körnermenge zu bestimmen und basierend darauf auf den Anteil von Doppelstellen zu schließen. Beispielsweise kann aus zwei Messsignalen des Wiegesensors, die von unterschiedlichen Zeiten stammen, auf eine Gewichtsänderung des Saatguts im Vorratsbehälter 1 geschlossen werden. Diese Massenänderung kann beispielsweise über das sogenannte "Tausendkorngewicht" in eine Körneranzahl umgerechnet werden. Somit ist dann die insgesamt abgegebene Körneranzahl bekannt.

Die Recheneinheit kann ebenso aus den Messsignalen der Sensoren zum Detektieren von Fehlstellen auf eine Körneranzahl schließen, indem unter Berücksichtigung der detektierten Fehlstellen die Häufigkeit der durch Körner erzeugten Signale bestimmt wird. Ergibt die Berechnung der abgegebenen Körnermenge basierend auf Messdaten des Wiegesensors beispielsweise eine Anzahl von 105, während die Sensoren der Vereinzelungsvorrichtungen nur 100 Körner zählten, kann die Recheneinheit auf fünf nicht erkannte Doppelstellen, also einen Anteil von 5 % an Doppelstellen schließen.

Im weiteren Betrieb der Sämaschine kann somit die von den Sensoren detektierte Körnermenge mit einem Faktor, in diesem Beispiel 1,05, multipliziert werden, um auf die tatsächlich ausgebrachte Körnermenge zu schließen.

Alternativ oder zusätzlich kann an einer oder mehreren, nicht aber an allen Reiheneinheiten ein der Vereinzelungsvorrichtung zugeordneter Körnerzähler vorgesehen sein, der nicht nur zum Detektieren von Fehlstellen, sondern auch zum Detektieren von Doppelstellen ausgebildet ist. Mit solchen präzisen Sensoren kann Anzahl und/oder Anteil an Doppelstellen im Körnerstrom exakt bestimmt werden. Das Ergebnis dieser Reiheneinheiten kann dann auf die anderen Reiheneinheiten übertragen werden. Beispielsweise können die Sensordaten der übrigen Reiheneinheiten entsprechend dem Ergebnis basierend auf den präzisen Körnerzählern korrigiert werden.

Gemäß einer weiteren Alternative, die unabhängig oder zusammen mit den anderen Ausführungen der Überwachungseinrichtung realisiert werden kann, kann die Recheneinheit ausgebildet sein, um basierend auf einer eingegebenen Körneranzahl oder einer basierend auf einer Körnermasse errechneten Körneranzahl, die innerhalb einer vorgegebenen Zeit von einer Vereinzelungsvorrichtung ausgegeben wurde, und basierend auf Messsignalen des dieser Vereinzelungsvorrichtung zugeordneten Sensors zur Bestimmung von Fehlstellen auf die Anzahl oder den Anteil von Doppelstellen schließen. Hier kann beispielsweise mittels einer manuellen Abdrehprobe eine Körnermasse bestimmt werden, die innerhalb einer vorgegebenen Zeit ausgegeben wird. Über das Tausendkorngewicht kann wiederum auf die Körneranzahl geschlossen werden. Die Bestimmung der Doppelstellen kann dann entsprechend der oben beschriebenen Ausführungsform, die auf Daten eines Wiegesensors zurückgreift, erfolgen.

Die bestimmte Anzahl an Doppelstellen bzw. Fehlstellen oder der jeweilige Anteil an der Gesamtzahl der abgegebenen Körner kann jeweils verwendet werden, um die Vereinzelungsvorrichtungen zu steuern oder zu regeln. Insbesondere kann die Drehzahl der Fördereinrichtungen der Vereinzelungsvorrichtungen entsprechend geregelt oder gesteuert werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Sämaschine umfassend einen zentralen Vorratsbehälter (1) und mehrere Reiheneinheiten, wobei jede Reiheneinheit eine Vereinzelungsvorrichtung (2) umfasst, wobei jeder Vereinzelungsvorrichtung (2) ein Sensor (5) zum Detektieren von Fehlstellen im vereinzelten Körnerstrom zugeordnet ist,
**dadurch gekennzeichnet, dass**
eine von den Sensoren (5) verschiedene Überwachungseinrichtung zum Detektieren von Doppelstellen vorgesehen ist.

2. Sämaschine nach Anspruch 1, wobei die Überwachungseinrichtung einen dem zentralen Vorratsbehälter (1) zugeordneten Wiegesensor und eine Recheneinheit umfasst, wobei die Recheneinheit ausgebildet ist, um basierend auf Daten des Wiegesensors die abgegebene Körnermenge zu bestimmen und mit Hilfe von Messsignalen der den Vereinzelungsvorrichtungen zugeordneten Sensoren (5) zur Bestimmung von Fehlstellen auf die Anzahl und/oder den Anteil von Doppelstellen zu schließen.

3. Sämaschine nach Anspruch 1 oder 2, wobei die Überwachungseinrichtung an einer oder mehreren, nicht aber an allen Reiheneinheiten einen der Vereinzelungsvorrichtung (2) zugeordneten Körnerzähler umfasst, der zum Detektieren von Doppelstellen ausgebildet ist.

4. Sämaschine nach einem der vorangegangenen Ansprüche, wobei die Überwachungseinrichtung eine Recheneinheit umfasst, wobei die Recheneinheit ausgebildet ist, um basierend auf einer eingegebenen Körneranzahl oder einer basierend auf einer Körnermasse errechneten Körneranzahl, die innerhalb einer vorgegebenen Zeit von einer Vereinzelungsvorrichtung (2) ausgegeben wurde, und basierend auf Messsignalen des dieser Vereinzelungsvorrichtung (2) zugeordneten Sensors (5) zur Bestimmung von Fehlstellen auf die Anzahl und/oder den Anteil von Doppelstellen zu schließen.

5. Sämaschine nach einem der vorangegangenen Ansprüche, außerdem umfassend eine Steuerung, die so ausgebildet ist, dass sie die Vereinzelungsvorrichtungen (2) der Reiheneinheiten basierend auf dem Ergebnis der Bestimmung der Doppelstellen steuert oder regelt.

6. Sämaschine nach einem der vorangegangenen Ansprüche, wobei die Sensoren (5) zum Detektieren von Fehlstellen optische Sensoren sind.
